# EUROPEAN PATENT SPECIFICATION

(11) **EP 3 967 563 B1**
(45) Date of publication and mention of the grant of the patent: **13.09.2023**
(21) Application number: 20805338.9
(22) Date of filing: 11.05.2020
(51) Int. Cl.: B60T 8/00, B60T 8/1755, B60W 10/20, B60W 10/18, B60W 30/09, B62J 27/00

(54) **LEANING VEHICLE COMPRISING BRAKE ASSIST CONTROL DEVICE**
NEIGEFAHRZEUG MIT BREMSUNTERSTÜTZUNGSSTEUERVORRICHTUNG
VÉHICULE À INCLINAISON COMPRENANT UN DISPOSITIF DE COMMANDE D'ASSISTANCE AU FREINAGE

(30) Priority: 10.05.2019 JP 2019089839
(43) Date of publication of application: 16.03.2022
(73) Proprietor: Yamaha Hatsudoki Kabushiki Kaisha, Iwata-shi, Shizuoka 438-8501 (JP)
(72) Inventor: TORIGOE, Hoshimi, Iwata-shi, Shizuoka 438-8501 (JP); KOBAYASHI, Hiroshi, Iwata-shi, Shizuoka 438-8501 (JP); KISHI, Tomoaki, Iwata-shi, Shizuoka 438-8501 (JP); YASUKAWA, Risa, Iwata-shi, Shizuoka 438-8501 (JP)
(74) Representative: Zimmermann, Tankred Klaus
(86) International application number: PCT/JP2020/018876
(87) International publication number: WO 2020/230767

(56) References cited:
- JP-A- 2006 069 303
- JP-A- 2006 069 303
- JP-A- 2018 177 046
- JP-A- 2018 177 046

## Description

### [Technical Field]

The present teaching relates to a leaning vehicle including a brake assist control device which is configured to control an assisting braking force based on a margin obtained based on the relationship between an obstacle and a host vehicle and on a brake operation by a rider.

### [Background Art]

For example, JP 2006 069303 A proposes a leaning vehicle including a brake assist control device which is configured to control an assisting braking force based on (i) a margin which corresponds to an obstacle and is obtained based on the relationship between the obstacle and a host vehicle and (ii) a brake operation by a rider.
The assisting braking force is braking force that is part of braking force generated based on the brake operation by the rider and is added based on (i) the brake operation by the rider and (ii) a margin which corresponds to an obstacle and is obtained based on the relationship between the obstacle and the host vehicle.

JP 2018 177046 A discloses a control device and a control method, which can improve safety by automatic deceleration operation while inhibiting falling-down of a motorcycle, and to obtain a brake system equipped with such a control device [Summary]

### [Technical Problem]

There is a need for a leaning vehicle including a brake assist control device which is configured to perform control different from the control recited in JP 2006 069303 A1.

An object of the present teaching is to provide a leaning vehicle which leans rightward in a vehicle left-right direction when turning right and leans leftward in the vehicle left-right direction when turning left, and includes a brake assist control device configured to perform control different from known control schemes.

### [Solution to Problem]

The inventors of the present teaching diligently studied assisting braking force of a leaning vehicle including a brake assist control device configured to control the assisting braking force based on a margin obtained based on the relationship between an obstacle and the host vehicle and on a brake operation by the rider, and found a novel control scheme.

When there is an obstacle ahead of a leaning vehicle that is running, this control can differentiate the assisting braking force between the following two scenes, even if a brake operation amount, which is an amount of the brake operation by the rider, is identical in these scenes.

In the first scene, the rider deals with the obstacle by the braking force generated by a brake operation by the rider without changing the traveling direction of the leaning vehicle. In the second scene, the rider deals with the obstacle by both the change of the traveling direction of the leaning vehicle and the braking force generated by a brake operation by the rider.

Through the study the inventors found that, unlike the first scene in which the rider deals with the obstacle by the braking force generated by a brake operation by the rider without changing the traveling direction of the leaning vehicle, the rider performs a brake operation in consideration of the action of the leaning vehicle in the left-right direction, in the second scene in which the rider deals with the obstacle by both the change of the traveling direction of the leaning vehicle and the braking force generated by the brake operation by the rider. When braking force is generated in a leaning vehicle leaning in the left-right direction, the leaning vehicle tends to stand up. It is considered that the rider performs a brake operation in consideration of this action. The action is specific to leaning vehicles and is not observed in automobiles. A feature that the rider performs the brake operation in consideration of the action was found through diligent study of brake operations by riders riding leaning vehicles. In other words, this feature cannot be found no matter how scenes in which a brake operation is not performed by a rider are observed in a detailed manner.

A leaning vehicle including a brake assist control device of an embodiment of the present teaching has the following structures.

The leaning vehicle includes the brake assist control device which is mounted on a leaning vehicle body frame leaning rightward in a vehicle left-right direction when turning right and leaning leftward in the vehicle left-right direction when turning left. The brake assist control device is configured to control an assisting braking force based on a margin obtained based on the relationship between an obstacle and the leaning vehicle and on a brake operation by a rider.

The brake assist control device is configured to acquire (i) at least one of a leaning angular speed which is a time change rate of a leaning angle of the leaning angle or a leaning angular acceleration which is a time change rate of the leaning angular speed of the leaning vehicle, (ii) the margin obtained based on the relationship between the obstacle and the leaning vehicle, and (iii) a brake operation amount which is an amount of a brake operation by the rider.

The brake assist control device is configured to control the assisting braking force so that a first braking force which is the maximum braking force generated in response to a first brake operation amount performed by the rider in a first scene is larger than a second braking force which is the maximum braking force generated in response to the first brake operation amount performed by the rider in a second scene, based on the at least one of the leaning angular speed or the leaning angular acceleration, the margin acquired based on the relationship between the obstacle and the leaning vehicle, and the brake operation amount performed by the rider, which have been acquired.

The first scene is a scene in which the rider deals with the obstacle by a braking force generated by a brake operation by the rider without changing a traveling direction of the leaning vehicle, and the second scene is a scene in which the rider deals with the obstacle by both a change of the traveling direction of the leaning vehicle and braking force generated by a brake operation by the rider.

With this arrangement, in the leaning vehicle leaning rightward in the vehicle left-right direction when turning right and leaning leftward in the vehicle left-right direction when turning left, the assisting braking force is controlled based on (i) at least one of the leaning angular speed which is a time change rate of the leaning angle of the leaning angle or the leaning angular acceleration which is a time change rate of the leaning angular speed of the leaning vehicle, (ii) the margin obtained based on the relationship between the obstacle and the host vehicle, and (iii) the brake operation amount which is an amount of a brake operation by the rider, in consideration of the at least two scenes described below. The first scene is a scene in which the rider deals with the obstacle solely by activating the brake, without changing the traveling direction. The second scene is a scene in which the rider deals with the obstacle by activating the brake and a change of the traveling direction.

It is therefore possible to provide a leaning vehicle which leans rightward in a vehicle left-right direction when turning right and leans leftward in the vehicle left-right direction when turning left, and includes a brake assist control device configured to perform control different from known control schemes.

A leaning vehicle including a brake assist control device of an embodiment of the present teaching may have the following structure.

The brake assist control device is configured to control the assisting braking force so that the first braking force, which is the maximum braking force generated in response to a first brake operation amount performed by the rider in the first scene, is larger than a third braking force, which is the maximum braking force generated in response to the first brake operation amount performed by the rider in a third scene, based on the at least one of the leaning angular speed or the leaning angular acceleration, the margin acquired based on the relationship between the obstacle and the leaning vehicle, and the brake operation amount performed by the rider, which have been acquired.

The first scene is a scene in which the rider deals with the obstacle by the braking force generated by a brake operation by the rider without changing a traveling direction of the leaning vehicle, and the third scene is a scene in which no obstacle exists ahead of the leaning vehicle in the traveling direction and the rider performs the brake operation without changing the traveling direction of the leaning vehicle.

With this arrangement, in the leaning vehicle leaning rightward in the vehicle left-right direction when turning right and leaning leftward in the vehicle left-right direction when turning left, the assisting braking force is controlled based on (i) at least one of the leaning angular speed which is a time change rate of the leaning angle of the leaning angle or the leaning angular acceleration which is a time change rate of the leaning angular speed of the leaning vehicle, (ii) the margin obtained based on the relationship between the obstacle and the host vehicle, and (iii) the brake operation amount which is an amount of a brake operation by the rider, in consideration of the at least three scenes described below. The first scene is a scene in which the rider deals with the obstacle solely by activating the brake, without changing the traveling direction. The second scene is a scene in which the rider deals with the obstacle by activating the brake and changing the traveling direction. The third scene is a scene in which no obstacle exists and the rider performs the brake operation without changing the traveling direction.

It is therefore possible to provide a leaning vehicle which leans rightward in a vehicle left-right direction when turning right and leans leftward in the vehicle left-right direction when turning left, and includes a brake assist control device configured to perform control which is further different from known control schemes.

A leaning vehicle including a brake assist control device of an embodiment of the present teaching may have the following structure.

The brake assist control device is configured to control the assisting braking force so that the second braking force, which is the maximum braking force generated in response to a first brake operation amount performed by the rider in the second scene, is equal to or larger than a fourth braking force, which is the maximum braking force generated in response to the first brake operation amount performed by the rider in a fourth scene, based on the at least one of the leaning angular speed or the leaning angular acceleration, the margin acquired based on the relationship between the obstacle and the leaning vehicle, and the brake operation amount performed by the rider, which have been acquired. The second scene is a scene in which the rider deals with the obstacle, a change of the traveling direction of the leaning vehicle and the braking force generated by the brake operation by the rider, and the fourth scene is a scene in which no obstacle exists ahead of the leaning vehicle in the traveling direction and the rider performs the change of the traveling direction of the leaning vehicle and the brake operation.

With this arrangement, in the leaning vehicle leaning rightward in the vehicle left-right direction when turning right and leaning leftward in the vehicle left-right direction when turning left, the assisting braking force is controlled based on (i) at least one of the leaning angular speed which is a time change rate of the leaning angle of the leaning angle or the leaning angular acceleration which is a time change rate of the leaning angular speed of the leaning vehicle, (ii) the margin obtained based on the relationship between the obstacle and the host vehicle, and (iii) the brake operation amount which is an amount of a brake operation by the rider, in consideration of the at least four scenes described below. The first scene is a scene in which the rider deals with the obstacle solely by activating the brake, without changing the traveling direction. The second scene is a scene in which the rider deals with the obstacle by activating the brake and changing the traveling direction. The third scene is a scene in which no obstacle exists and the rider performs the brake operation without changing the traveling direction. The fourth scene is a scene in which no obstacle exists and the rider performs the brake operation and changing the traveling direction.

It is therefore possible to provide a leaning vehicle which leans rightward in a vehicle left-right direction when turning right and leans leftward in the vehicle left-right direction when turning left, and includes a brake assist control device configured to perform control which is further different from known control schemes.

A leaning vehicle including a brake assist control device of an embodiment of the present teaching may have the following structure.

The brake assist control device has a function of an antilock braking system. The brake assist control device is configured to activate the function of the antilock braking system in the first scene in which the rider deals with the obstacle by the braking force generated by the brake operation by the rider without changing the traveling direction of the leaning vehicle and in the second scene in which the rider deals with the obstacle by a change of the traveling direction of the leaning vehicle and the braking force generated by the brake operation by the rider.

With this arrangement, in the leaning vehicle leaning rightward in the vehicle left-right direction when turning right and leaning leftward in the vehicle left-right direction when turning left, the function of the antilock braking system can be exerted even if the assisting braking force is applied in at least the following two scenes. The first scene is a scene in which the rider deals with the obstacle solely by activating the brake, without changing the traveling direction. The second scene is a scene in which the rider deals with the obstacle by activating the brake and changing the traveling direction.

It is therefore possible to provide a leaning vehicle which leans rightward in a vehicle left-right direction when turning right and leans leftward in the vehicle left-right direction when turning left, and includes a brake assist control device configured to perform control which is further different from known control schemes.

A leaning vehicle including a brake assist control device of an embodiment of the present teaching may have the following structure.

The brake assist control device is configured to activate the function of the antilock braking system in scenes excluding both the first scene in which the rider deals with the obstacle by the braking force generated by the brake operation by the rider without changing the traveling direction of the leaning vehicle and the second scene in which the rider deals with the obstacle by a change of the traveling direction of the leaning vehicle and the braking force generated by the brake operation by the rider.

With this arrangement, in the leaning vehicle leaning rightward in the vehicle left-right direction when turning right and leaning leftward in the vehicle left-right direction when turning left, the function of the antilock braking system can be exerted at least in the following scenes other than the first scene and the second scene, such as a third scene and a fourth scene described below. The first scene is a scene in which the rider deals with the obstacle solely by activating the brake, without changing the traveling direction. The second scene is a scene in which the rider deals with the obstacle by activating the brake and changing the traveling direction. The third scene is a scene in which no obstacle exists and the rider performs the brake operation without changing the traveling direction. The fourth scene is a scene in which no obstacle exists and the rider performs the brake operation and changing the traveling direction.

It is therefore possible to provide a leaning vehicle which leans rightward in a vehicle left-right direction when turning right and leans leftward in the vehicle left-right direction when turning left, and includes a brake assist control device configured to perform control which is further different from known control schemes.

A leaning vehicle including a brake assist control device of an embodiment of the present teaching may have the following structure.

The leaning vehicle including the brake assist control device further includes a notification device which is configured to be activated before the brake assist control device controls the assisting braking force.

With this arrangement, in the leaning vehicle leaning rightward in the vehicle left-right direction when turning right and leaning leftward in the vehicle left-right direction when turning left, the rider is notified of the possibility of the addition of the assisting braking force in at least the following two scenes, before the assisting braking force is actually added. The first scene is a scene in which the rider deals with the obstacle solely by activating the brake, without changing the traveling direction. The second scene is a scene in which the rider deals with the obstacle by activating the brake and changing the traveling direction.

It is therefore possible to provide a leaning vehicle which leans rightward in a vehicle left-right direction when turning right and leans leftward in the vehicle left-right direction when turning left, and includes a brake assist control device configured to perform control which is further different from known control schemes.

A leaning vehicle including a brake assist control device of an embodiment of the present teaching may have the following structure.

The brake assist control device controls the assisting braking force so that a fifth braking force which is the maximum braking force generated in response to a first brake operation amount performed by the rider in a fifth scene is identical with the first braking force in the first scene, based on the at least one of the leaning angular speed or the leaning angular acceleration, the margin acquired based on the relationship between the obstacle and the leaning vehicle, and the brake operation amount performed by the rider, which have been acquired, the fifth scene being a scene in which the rider deals with the obstacle by a change of the traveling direction of the leaning vehicle, which is smaller than the change in the second scene, and braking force generated by a brake operation by the rider.

### [Leaning Vehicle]

A leaning vehicle of the present teaching and embodiments is a vehicle which includes a leaning vehicle body frame structured to lean rightward in the vehicle left-right direction when turning right and lean leftward in the vehicle left-right direction when turning left. The vehicle includes at least one front wheel and at least one rear wheel. The leaning vehicle may include two front wheels and one or two rear wheels. The leaning vehicle may include one front wheel and one or two rear wheels. In the leaning vehicle, either the front wheel or the rear wheel may be steered. The leaning vehicle includes a driving source. The driving source may be an engine, a motor driven by electricity, or a hybrid driving source including both an engine and a motor. The leaning vehicle body frame is a member which mainly receives stress in the leaning vehicle. The leaning vehicle body frame may be a frame formed by combining a plurality of components, or may be an integrally-molded frame.

### [Brake Operation and Brake Operation Amount]

The leaning vehicle includes a front wheel brake, a rear wheel brake, and at least one brake operator. The front wheel brake is configured to apply front wheel braking force to the front wheel. The rear wheel brake is configured to apply rear wheel braking force to the rear wheel. The front wheel brake, the rear wheel brake, or a combination of the front wheel brake and the rear wheel brake may be simply referred to as a brake. The brake operator may be a lever operated by a hand of the rider or a pedal operated by a foot of the rider. The leaning vehicle may include a front wheel brake operator and a rear wheel brake operator as the brake operator. The front wheel brake operator may be arranged to be able to operate not only the front wheel brake but also the rear wheel brake. The rear wheel brake operator may be arranged to be able to operate not only the rear wheel brake but also the front wheel brake. The front wheel brake and the rear wheel brake may be operated by a single brake operator. A brake operation in the present teaching and the embodiments indicates an action to operate a brake operator provided in the leaning vehicle. A brake operation amount indicates to what extent the rider performs the brake operation. The brake operation amount may be information directly indicating the brake operation amount, or information indirectly indicating the brake operation amount, e.g., information correlated to the brake operation amount. Acquisition of a brake operation amount indicates that information indicating a brake operation amount is directly acquired or information indicating a brake operation amount is indirectly acquired. A first brake operation amount of the present teaching and the embodiments may be an operation amount of the front wheel brake operator, an operation amount of the rear wheel brake operator, or an operation amount of the front wheel brake operator and the rear wheel brake operator. Braking force as a result of the first brake operation amount in the present teaching and the embodiments may be the front wheel braking force, the rear wheel braking force, or the sum total of the front wheel braking force and the rear wheel braking force.

### [Brake Assist Control Device]

A brake assist control device of the present teaching and the embodiments is a controller having a function of controlling the assisting braking force. The brake assist control device may have other functions. For example, when an ABS control device having a function of antilock braking system (ABS) has a function of controlling the assisting braking force, the ABS control device is regarded as a brake assist control device. The brake assist control device of the present teaching and the embodiments is electrically connected to a leaning angle related sensor which is required to acquire at least one of the leaning angular speed, or the leaning angular acceleration, a margin related sensor which is required to determine a margin which is acquired based on the relationship between an obstacle and a host vehicle, and a brake operation amount related sensor which is required to acquire an operation amount of a brake operator. Examples of the leaning angle related sensor include an IMU (Inertial Measurement Unit), a GPS (Global Positioning System), and a camera for obtaining a leaning angle from an image. The margin related sensor is, for example, a camera taking images ahead of the leaning vehicle, a millimeter wave radar, a LIDAR, or a combination of these devices. Examples of the brake operation amount related sensor include an angular sensor configured to detect a rotational angle of the brake operator and a hydraulic pressure sensor configured to detect hydraulic pressure generated by the brake operator. Each sensor may be of any type as long as the functions described above are achieved. The brake has a function of generating braking force upon receiving an electrical signal from the brake assist control device. The brake may be of any type as long as the function described above is achieved. The brake assist control device may be electrically connected to a sensor different from the sensors above. The brake assist control device may be controlled based on a signal acquired by a sensor different from the sensors above. The brake assist control device may have a function of the antilock brake system (ABS). In this case, the brake assist control device may be electrically connected to a sensor capable of detecting a slipping state of a wheel. The brake assist control device may control only braking force applied to the front wheel, for example. The brake assist control device may control only braking force applied to the rear wheel, for example. The brake assist control device may control braking forces applied to the front wheel and the rear wheel, for example. The brake assist control device may control total braking force applied to the front wheel and the rear wheel. The brake assist control device may control a mechanically-connected brake which is a brake mechanically connected to a brake operator. The brake assist control device may control an electrically-connected brake which is a brake not mechanically but electrically connected to a brake operator. The brake assist control device may control a brake that involves both mechanical connection and electrical connection.

### [Margin Acquired Based on Relationship between Obstacle and Host Vehicle]

In the present teaching and the embodiments, a margin acquired based on the relationship between an obstacle and a host vehicle is a margin when a rider deals with an obstacle. The margin is acquired based on the relative speed between an obstacle and a host vehicle, for example. The margin is information such as a numerical value and the magnitude of an analog signal. When the margin is higher than a reference value, there is a margin in comparison with the reference value. The reference value may be set in advance in accordance with each type of the leaning vehicles. The margin may be corrected or learned based on signals obtained by various types of sensors. The margin may be information directly indicating the margin or information indirectly indicating the margin such as information correlated with the margin. Acquisition of a margin indicates acquisition of information directly indicating the margin or acquisition of information indirectly indicating the margin.

### [Assisting Braking Force]

Assisting braking force of the present teaching and the embodiments is part of braking force generated by a brake operation by a rider, and is increased or decreased under the control of the brake assist control device based on (i) a margin corresponding to an obstacle and acquired based on the relationship between the obstacle and the host vehicle and (ii) a brake operation by the rider. For example, the assisting braking force is braking force which is increased or decreased under the control of the brake assist control device so that braking force generated by an operation of the brake operator by the rider is different when the operation amount of the brake operator is the same but another condition such as the margin and the leaning angle of the leaning vehicle is different. For example, the assisting braking force is braking force added, under the control of the brake assist control device, to mechanical braking force generated by an operation of the brake operator by the rider, when the brake operator is mechanically connected to the brake. The mechanical connection is, for example, connection by a pipe filled with brake oil or connection by a brake wire. For example, when the brake operator is connected to the brake not mechanically but electrically, it is difficult to clearly discern only the assisting braking force from the braking force generated by an operation of the brake operator by the rider. However, for example, even when the brake operator is connected to the brake not mechanically but electrically, it is considered that the braking force includes assisting braking force increased or decreased under the control of the brake assist control device, if the braking force generated in response to the same operation amount of the brake operator is different due to the difference in a condition other than the operation amount of the brake operator. Under this hypothesis, a first braking force that is the maximum braking force generated by a first brake operation amount in the above-described first scene includes assisting braking force that is a positive value. The second braking force that is the maximum braking force generated by a first brake operation amount in the above-described second scene may or may not include assisting braking force that is a positive value. Meanwhile, braking force which is increased or decreased not based on (i) a margin corresponding to an obstacle determined and acquired based on the relationship between the obstacle and the host vehicle and (ii) a brake operation by the rider, e.g., braking force increased or decreased by the ABS is not assisting braking force of the present teaching and the embodiments.

### [First Braking Force and Second Braking Force]

In the present teaching and the embodiments, the maximum braking force generated in response to the first brake operation amount in the first scene is a maximum value of braking force generated in response to the first brake operation amount in one first scene. The maximum braking force generated in response to the first brake operation amount in the second scene is a maximum value of braking force generated in response to the first brake operation amount in one second scene. This is applicable to the maximum braking force generated in response to the first brake operation amount in each of the third scene, the fourth scene, and the fifth scene.

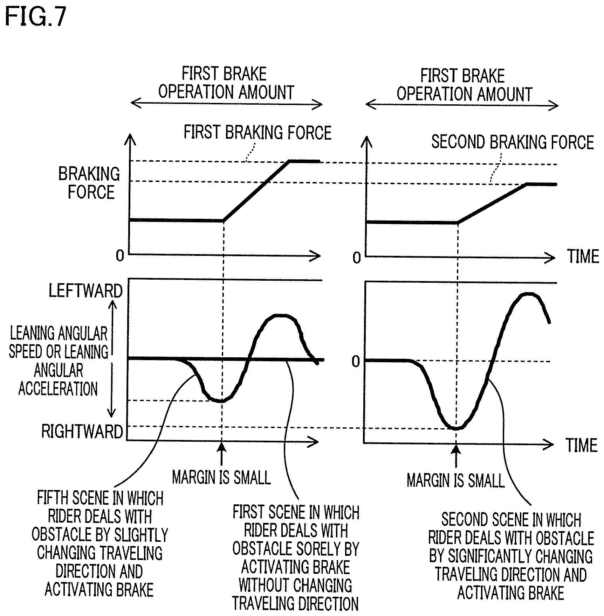

In the first scene, the first brake operation amount may or may not be maintained. In the second scene, the first brake operation amount may or may not be maintained. This is applicable to the first brake operation amount in each of the third scene, the fourth scene, and the fifth scene. When the first brake operation amount is maintained in the first scene, the brake assist control device may control the assisting braking force so that the braking force generated in response to the first brake operation amount in the first scene is at least partially maintained at the first braking force (see e.g., FIG. 7). In this case, there is a timing when the time change rate of the first braking force is zero. When the first brake operation amount is maintained in the second scene, the brake assist control device may control the assisting braking force so that the braking force in response to the first brake operation amount in the first scene is at least partially maintained at the second braking force (see e.g., FIG. 7). In this case, there is a timing when the time change rate of the second braking force is zero. The brake assist control device may control the assisting braking force so that the first braking force which is the maximum braking force generated in response to the first brake operation amount in the first scene and with which the time change rate is zero is larger than the second braking force which is the maximum braking force generated in response to the first brake operation amount in the second scene and with which the time change rate is zero. The brake assist control device may control the assisting braking force so that the first braking force that is the maximum braking force generated by maintaining the first brake operation amount in the first scene is larger than the second braking force that is the maximum braking force generated by maintaining the first brake operation amount in the second scene. The first scene and the second scene may be scenes in which assisting braking force is generated immediately after the rider starts a brake operation, or scenes in which assisting braking force is generated after a time interval elapses from the start of a brake operation by the rider. The brake assist control device may control the assisting braking force so that the first braking force generated in response to the first brake operation amount in a scene which is an example of the first scene and in which assisting braking force is generated immediately after the start of a brake operation by the rider is larger than the second braking force generated in response to the first brake operation amount in a scene which is an example of the second scene and in which assisting braking force is generated immediately after the start of a brake operation by the rider. The brake assist control device may control the assisting braking force so that the first braking force generated in response to the first brake operation amount in a scene which is an example of the first scene and in which assisting braking force is generated after a time interval elapses from the start of a brake operation by the rider is larger than the second braking force generated in response to the first brake operation amount in a scene which is an example of the second scene and in which assisting braking force is generated after a time interval elapses from the start of a brake operation by the rider.

The second braking force generated in response to the first brake operation amount in the second scene may be braking force in a state in which the leaning vehicle (leaning vehicle body frame) leans rightward or leftward in the vehicle left-right direction, or may be braking force in a state in which the leaning vehicle (leaning vehicle body frame) does not lean rightward or leftward in the vehicle left-right direction after leaning rightward or leftward in the vehicle left-right direction. The fourth braking force generated in response to the first brake operation amount in the fourth scene may be braking force in a state in which the leaning vehicle (leaning vehicle body frame) leans rightward or leftward in the vehicle left-right direction, or may be braking force in a state in which the leaning vehicle (leaning vehicle body frame) does not lean rightward or leftward in the vehicle left-right direction after leaning rightward or leftward in the vehicle left-right direction.

### [Control Amount of Controlling Assisting Braking Force by Brake Assist Control Device]

In the present teaching and the embodiments, a control amount of controlling the assisting braking force by the brake assist control device can be set for each type of the leaning vehicles. For example, the control amount may be set so that the assisting braking force is a constant amount, a constant magnification, or a predetermined amount. For example, the control amount may be a control amount obtained by a calculation, a control amount obtained from a map set in advance, or a combination of them. The control amount may be corrected or learned based on signals obtained by various types of sensors. The assisting braking force may be zero. An operation to control the assisting braking force to be zero may be control by which the control of setting the assisting braking force is terminated or circumvented, or control by which the assisting braking force is set at zero. The control of the assisting braking force to be zero is not limited to any particular control scheme. In this case, the control amount may be zero. An operation to control the control amount to be zero may be control by which the control of setting the control amount is terminated or circumvented, or control by which the control amount is set at zero. The control of the control amount to be zero is not limited to any particular control scheme.

### [Change in Traveling Direction of Leaning Vehicle]

A change of the traveling direction of the leaning vehicle in the present teaching and the embodiments can be estimated based on the leaning angular speed and the leaning angular acceleration. The leaning vehicle includes the leaning vehicle body frame which leans rightward in the vehicle left-right direction when turning right and leans leftward vehicle left-right direction when turning left. In the leaning vehicle, the leaning vehicle body frame leans when the traveling direction changes. When the leaning vehicle body frame leans, the leaning angular speed or the leaning angular acceleration changes.

### [Leaning Angle]

A leaning angle in the present teaching and the embodiments is a tilt angle in the left-right direction of the leaning vehicle relative to the vertical direction. The tilt angle in the left-right direction of the leaning vehicle relative to the vertical direction indicates the tilt angle in the left-right direction of the leaning vehicle body frame of the leaning vehicle relative to the vertical direction. When the leaning angle is zero, the leaning vehicle is in an upright state in the left-right direction of the leaning vehicle. A state in which the absolute value of the leaning angle decreases is a state in which the leaning vehicle shifts from a state of leaning in the left-right direction of the leaning vehicle to the upright state. A state in which the absolute value of the leaning angle increases is a state in which the leaning vehicle shifts from the upright state to the state of leaning in the left-right direction of the leaning vehicle. The time change rate of the leaning angle during this shift is equivalent to the leaning angular speed. The time change rate of the leaning angular speed is equivalent to the leaning angular acceleration. The leaning angular speed or the leaning angular acceleration may be information directly indicating the leaning angular speed or the leaning angular acceleration, or may be information indirectly indicating the leaning angular speed or the leaning angular acceleration, such as information correlated to the leaning angular speed or the leaning angular acceleration. Acquisition of the leaning angular speed or the leaning angular acceleration indicates acquisition of information directly indicating the leaning angular speed or the leaning angular acceleration or acquisition of information indirectly indicating the leaning angular speed or the leaning angular acceleration.

### [Technical Differences from Other Driving Assist Control Devices and Combinations Thereof]

The brake assist control device of the present teaching and the embodiments is a driving assist control device of one type. In addition to this, as a driving assist control device, an AEB (Autonomous Emergency Braking) control device has been proposed. These two devices are technologically different in the following points. The brake assist control device is a technology of controlling the assisting braking force based on an operation of the brake operator by the rider. Meanwhile, the AEB control device is a technology of automatically controlling braking force even if the brake operator is not operated. These two control devices are significantly different technologies from the viewpoint of the brake operation by the rider. In addition to the above, the brake assist control device is a technology designed for scenes in which the brake operator is operated by the rider. The AEB control device is a technology designed for scenes in which the brake operator is not operated. These two control devices are significantly different technologies from the viewpoint of the brake operation by the rider. The brake assist control device may be combined with the AEB control device even though they are different technologies. For example, when an ABS control device having an autonomous emergency braking (AEB) function has a function of controlling the assisting braking force, the AEB control device is regarded as a brake assist control device.

### [Notification Device]

A notification device of the present teaching and the embodiments is a device configured to send a notification to the rider. The notification device sends at least one of a visual notification, an audio notification, a tactile notification, or an olfactory notification. The notification device may send a notification by combining at least two of a visual notification, an audio notification, a tactile notification, and an olfactory notification.

### [Application to Front-Rear Linked Brake]

The brake assist control device of the present teaching and the embodiments may control a front-rear linked brake. When the front wheel brake operator or the rear wheel brake operator is operated, the front-rear linked brake generates brake force at the rear wheel brake, and then generates braking force both at the front wheel brake and the rear wheel brake.

### [Specific Means]

The hardware structures of the brake assist control device of the present teaching and the embodiments and of the leaning vehicle including this control device are not detailed in this description. Because the features of the present teaching and the embodiments are technologies related to control, a person with ordinary skill in the art would understand that the leaning vehicle including the brake assist control device recited in the present teaching and the embodiments can be embodied by the hardware structures of a brake assist control device recited in JP 2006 069303 A or another known document and the hardware structures of a leaning vehicle including this control device.

### [To Control Braking Force]

In the present teaching and the embodiments, to control braking force indicates to control the brake in order to acquire braking force. For example, when a brake whose braking force varies in accordance with a hydraulic pressure is employed, to control braking force indicates to control the hydraulic pressure. For example, when a drum brake whose braking force varies in accordance with the rotational angle of a lever is employed, to control braking force indicates to control the rotational angle of the lever. A specific target of control is changed in accordance with the type of the brake.

### [To Increase / Decrease / Maintain Braking Force]

In the present teaching and the embodiments, to increase / decrease / maintain braking force is not limited to a case where actual braking force is increased / decreased / maintained. To increase / decrease / maintain braking force encompasses a case where control of increasing / decreasing / maintaining braking force is considered to be performed even if actual braking force is not increased / decreased / maintained.

### [Control Based on A]

In the present teaching and the embodiments, control based on A does not indicate that information used for the control is limited to A. Control based on A indicates that information based on which the control is performed includes information which is not A, and encompasses a case where control is performed based on A and information which is not A.

### <Others>

In the present teaching and embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

The invention is defined in the appended independent claim 1.

### [Brief Description of Drawings]

FIG. 1 outlines a leaning vehicle of First Embodiment of the present teaching.
FIG. 2 outlines a leaning vehicle of Second Embodiment of the present teaching.
FIG. 3 outlines a leaning vehicle of Third Embodiment of the present teaching.
FIG. 4 outlines a leaning vehicle of Fourth Embodiment of the present teaching.
FIG. 5 outlines a leaning vehicle of Fifth Embodiment of the present teaching.
FIG. 6 outlines a leaning vehicle of Sixth Embodiment of the present teaching.
FIG. 7 outlines a leaning vehicle of Seventh Embodiment of the present teaching.

### [Description of Embodiments]

### [Definition of Directions]

In the drawings, U indicates a direction upward from a leaning vehicle, D indicates a direction downward from the leaning vehicle, L indicates a direction leftward from the leaning vehicle, R indicates a direction rightward from the leaning vehicle, F indicates a direction forward from the leaning vehicle, and Re indicates a direction rearward from the leaning vehicle.

### [First Embodiment]

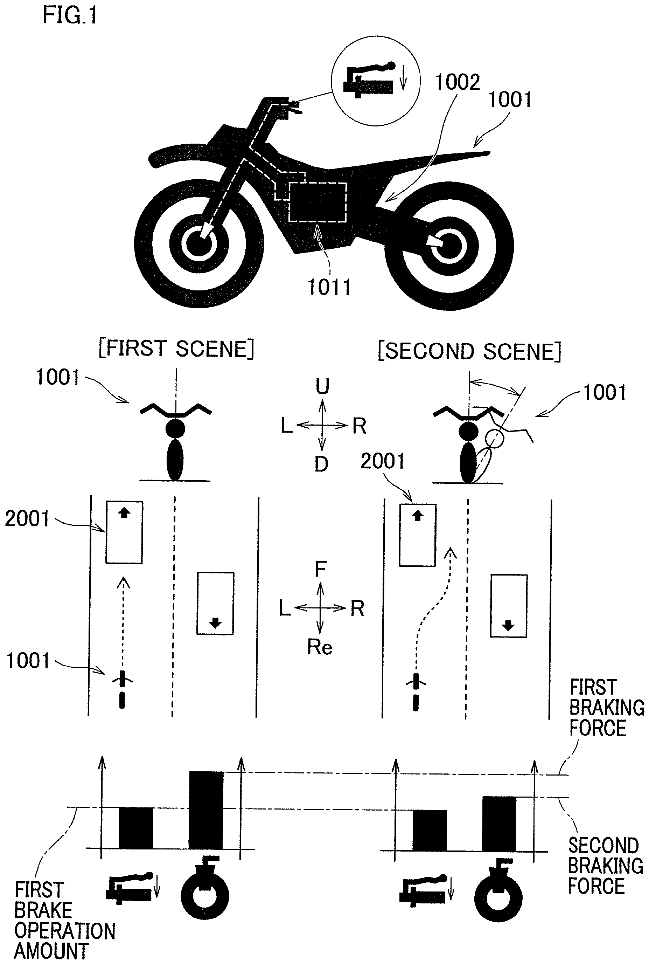

The following will describe a leaning vehicle of First Embodiment of the present teaching with reference to FIG. 1. A leaning vehicle 1001 includes a brake assist control device 1011 mounted on a leaning vehicle body frame 1002 which leans rightward in the vehicle left-right direction when turning right and leans leftward in the vehicle left-right direction when turning left. The brake assist control device 1011 is configured to control an assisting braking force based on (i) a margin acquired based on the relationship between an obstacle 2001 and a host vehicle 1001 and (ii) a brake operation by a rider.

The brake assist control device 1011 is configured to acquire (i) at least one of the leaning angular speed that is a time change rate of the leaning angle of the leaning vehicle 1001 or the leaning angular acceleration that is a time change rate of the leaning angular speed of the leaning vehicle 1001, (ii) a margin acquired based on the relationship between the obstacle 2001 and the host vehicle 1001, and (iii) a brake operation amount indicating an amount of the brake operation by the rider.

Based on at least one of the leaning angular speed or the leaning angular acceleration, the margin acquired based on the relationship between the obstacle 2001 and the host vehicle 1001, and the brake operation amount indicating the amount of the brake operation by the rider, which have been acquired, the brake assist control device 1011 controls the assisting braking force so that the first braking force which is the maximum braking force generated in response to a first brake operation amount which is performed by the rider in a first scene described below is larger than the second braking force which is the maximum braking force generated in response to the first brake operation amount performed by the rider in a second scene described below. In the first scene, the rider deals with the obstacle 2001 by the braking force generated by a brake operation by the rider, without changing the traveling direction of the leaning vehicle 1001. In the second scene, the rider deals with the obstacle 2001 by both the change of the traveling direction of the leaning vehicle and the braking force generated by a brake operation by the rider.

### [Second Embodiment]

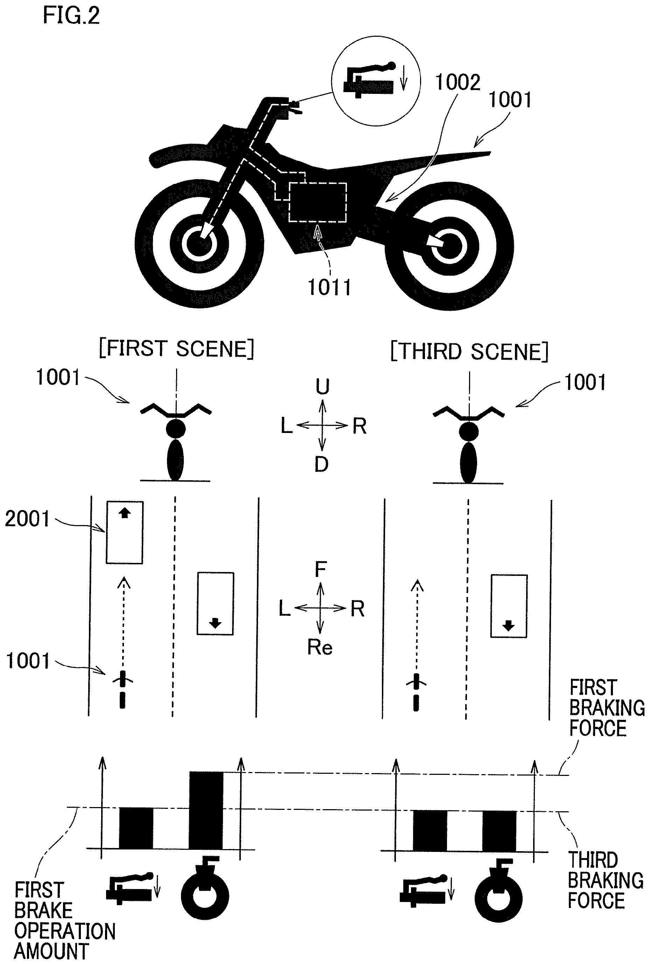

The following will describe a leaning vehicle of Second Embodiment of the present teaching with reference to FIG. 2. A brake assist control device 1011 of Second Embodiment includes the following arrangements, in addition to those of First Embodiment. Based on at least one of the leaning angular speed or the leaning angular acceleration having been acquired, the margin acquired based on the relationship between the obstacle 2001 and the host vehicle 1001, and the brake operation amount indicating the amount of the brake operation by the rider, the brake assist control device 1011 controls the assisting braking force so that the first braking force which is the maximum braking force generated in response to a first brake operation amount which is performed by the rider in a first scene described below is larger than the third braking force which is the maximum braking force generated in response to the first brake operation amount performed by the rider in a third scene described below. In the first scene, the rider deals with the obstacle 2001 by the braking force generated by a brake operation by the rider, without changing the traveling direction of the leaning vehicle 1001. In the third scene, no obstacle 2001 exists ahead the leaning vehicle 1001 in the traveling direction, and the rider performs the brake operation without changing the traveling direction of the leaning vehicle 1001.

A brake assist control device 1011 of Second Embodiment shown in FIG. 2 controls a brake which is mechanically connected to a brake operator and generates braking force varied in accordance with hydraulic pressure. In the graph shown in FIG. 2, a first brake operation amount, the first braking force, and the third braking force are hydraulic pressures. In FIG. 2, the hydraulic pressure corresponding to the first brake operation amount is identical with the hydraulic pressure corresponding to the third braking force. The third braking force does not therefore include assisting braking force.

### [Third Embodiment]

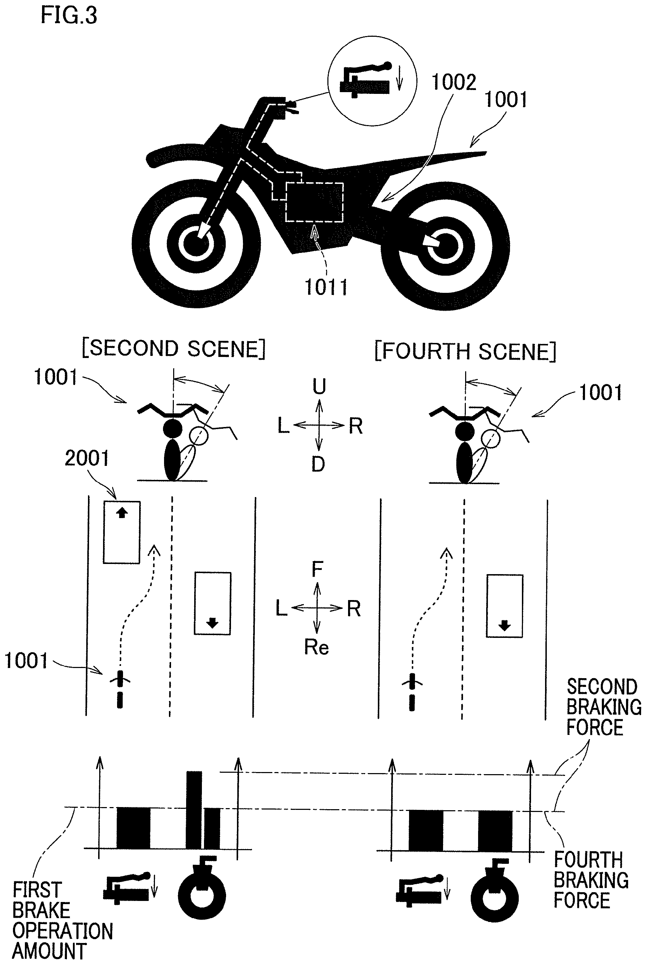

The following will describe a leaning vehicle of Third Embodiment of the present teaching with reference to FIG. 3. A brake assist control device 1011 of Third Embodiment includes the following arrangements, in addition to those of First Embodiment and Second Embodiment. Based on at least one of the leaning angular speed or the leaning angular acceleration having been acquired, the margin acquired based on the relationship between the obstacle 2001 and the host vehicle 1001, and the brake operation amount indicating the amount of the brake operation performed by the ride, the brake assist control device 1011 controls the assisting braking force so that the second braking force which is the maximum braking force generated in response to a first brake operation amount performed by the rider in a second scene described below is equal to or larger than the fourth braking force which is the maximum braking force generated in response to the first brake operation amount performed by the rider in a fourth scene described below. In the second scene, the rider deals with the obstacle 2001 by both the change of the traveling direction of the leaning vehicle and the braking force generated by a brake operation by the rider. In the fourth scene, no obstacle 2001 exists ahead the leaning vehicle 1001 in the traveling direction, and the rider performs a brake operation and changes the traveling direction of the leaning vehicle 1001.

A brake assist control device 1011 of Third Embodiment shown in FIG. 3 controls a brake which is mechanically connected to a brake operator and generates braking force varied in accordance with hydraulic pressure. The graph in FIG. 3 shows two examples of the second braking force. In the graph shown in FIG. 3, the first brake operation amount, two examples of the second braking force, and the fourth braking force are hydraulic pressures. One of the two examples of the second braking force is equal to the fourth braking force, whereas the other one of the two examples is larger than the fourth braking force. In FIG. 3, the hydraulic pressure corresponding to the first brake operation amount is identical with the hydraulic pressure corresponding to the fourth braking force. The fourth braking force does not therefore include assisting braking force.

### [Fourth Embodiment]

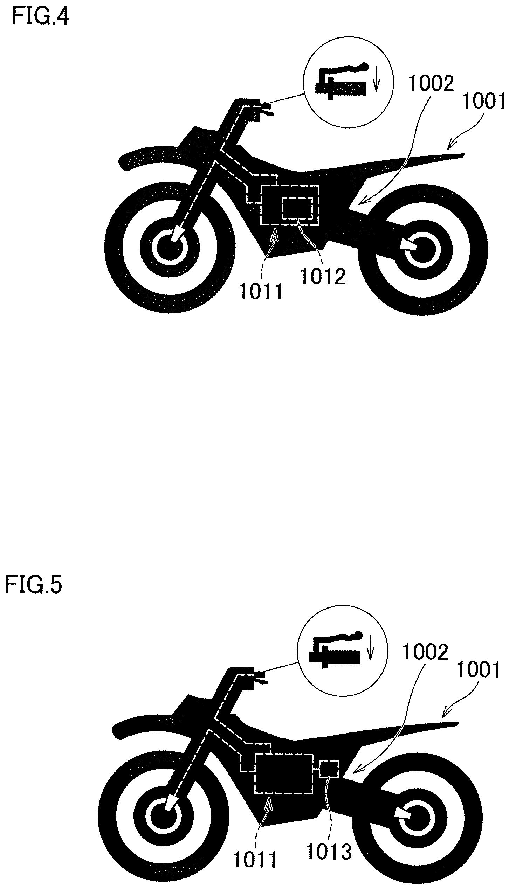

The following will describe a leaning vehicle of Fourth Embodiment of the present teaching with reference to FIG. 4. A brake assist control device 1011 of Fourth Embodiment includes the following arrangements, in addition to those of First Embodiment, Second Embodiment, or Third Embodiment. The brake assist control device 1011 has a function of an antilock braking system 1012. In a first scene and a second scene described below, the brake assist control device 1011 activates the function of the antilock braking system 1012. In the first scene, the rider deals with the obstacle 2001 by the braking force generated by a brake operation by the rider, without changing the traveling direction of the leaning vehicle 1001. In the second scene, the rider deals with the obstacle 2001 by both the change of the traveling direction of the leaning vehicle and the braking force generated by a brake operation by the rider.

The brake assist control device 1011 may additionally have the following arrangement. In scenes excluding both a first scene and a second scene, the brake assist control device 1011 activates the function of the antilock braking system 1012. In the first scene, the rider deals with the obstacle 2001 by the braking force generated by a brake operation by the rider, without changing the traveling direction of the leaning vehicle 1001. In the second scene, the rider deals with the obstacle 2001 by both the change of the traveling direction of the leaning vehicle and the braking force generated by a brake operation by the rider. For example, the brake assist control device 1011 is able to activate the function of the antilock braking system in a third scene and a fourth scene described below. In the third scene, no obstacle 2001 exists ahead the leaning vehicle 1001 in the traveling direction, and the rider performs brake operation without changing the traveling direction of the leaning vehicle 1001. In the fourth scene, no obstacle 2001 exists ahead the leaning vehicle 1001 in the traveling direction, and the rider performs a brake operation and changes the traveling direction of the leaning vehicle 1001.

### [Fifth Embodiment]

The following will describe a leaning vehicle of Fifth Embodiment of the present teaching with reference to FIG. 5. The leaning vehicle 1001 of Fifth Embodiment includes the following arrangements, in addition to those of the brake assist control device 1011 of First Embodiment, Second Embodiment, Third Embodiment, or Fourth Embodiment. The leaning vehicle 1001 including the brake assist control device 1011 further includes a notification device 1013 which is activated before the brake assist control device 1011 controls the assisting braking force.

### [Sixth Embodiment]

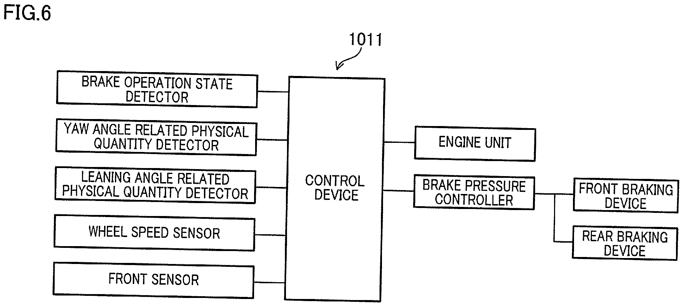

The following will describe a leaning vehicle of Sixth Embodiment of the present teaching with reference to FIG. 6. The brake assist control device 1011 of First Embodiment, Second Embodiment, Third Embodiment, Fourth Embodiment, or Fifth Embodiment may be arranged as described below. The brake assist control device 1011 is electrically connected to a front braking device, a rear braking device, a leaning angle related physical quantity detector which is required to acquire at least one of the leaning angular speed or the leaning angular acceleration, a front sensor required to determine a margin which is acquired based on the relationship between an obstacle 2001 and a host vehicle 1001, and a brake operation state detector which is required to acquire an operation amount of a brake operator. Furthermore, the brake assist control device 1011 is electrically connected to an engine unit. The brake assist control device 1011 may or may not be electrically connected to a yaw angle related physical quantity detector required to acquire at least one of yaw angular speed or yaw angular acceleration. The front braking device is an example of the front wheel brake or an example of the brake. The rear braking device is an example of the rear wheel brake or an example of the brake. The leaning angle related physical quantity detector is an example of the leaning angle related sensor. The front sensor is an example of the margin related sensor. The brake operation state detector is an example of the brake operation amount related sensor.

### [Seventh Embodiment]

The following will describe a leaning vehicle of Seventh Embodiment of the present teaching with reference to FIG. 7. A brake assist control device 1011 of a leaning vehicle of Seventh Embodiment has the arrangement described below, in addition to the arrangements of First Embodiment, Second Embodiment, Third Embodiment, Fourth Embodiment, or Fifth Embodiment. The brake assist control device 1011 may control an assisting braking force so that fifth braking force in a fifth scene is identical with the first braking force in the first scene. The fifth braking force is generated by a first brake operation amount performed by the rider in the fifth scene in which a rider deals with an obstacle 2001 by both a change of the traveling direction, which is smaller than the change in the second scene, and braking force generated by a brake operation by the rider.

### [Reference Signs List]

1001 leaning vehicle (host vehicle)
1002 leaning vehicle body frame
2001 obstacle
1011 brake assist control device
1012 antilock braking system
1013 notification device

## Claims

1. A leaning vehicle (1001), comprising:
a brake assist control device (1011),
wherein the brake assist control device (1011) is mounted on a leaning vehicle body frame (1002), the leaning vehicle body frame (1002) leaning rightward in a vehicle left-right direction when turning right and leaning leftward in the vehicle left-right direction when turning left,
wherein the brake assist control device (1011) is configured to control an assisting braking force based on a margin obtained based on a relationship between an obstacle (2001) and the leaning vehicle (1001) and on a brake operation by a rider,
wherein the brake assist control device (1011) is configured to acquire (i) at least one of a leaning angular speed which is a time change rate of a leaning angle of the leaning vehicle (1001) or a leaning angular acceleration which is a time change rate of the leaning angular speed of the leaning vehicle (1001), (ii) the margin obtained based on the relationship between the obstacle (2001) and the leaning vehicle (1001), and (iii) a brake operation amount which is an amount of a brake operation by the rider, and
**characterized by**
wherein the brake assist control device (1011) is configured to control the assisting braking force so that a first braking force, which is the maximum braking force generated in response to a first brake operation amount performed by the rider in a first scene, is larger than a second braking force, which is the maximum braking force generated in response to the first brake operation amount performed by the rider in a second scene, based on the at least one of the leaning angular speed or the leaning angular acceleration, the margin acquired based on the relationship between the obstacle (2001) and the leaning vehicle (1001), and the brake operation amount performed by the rider, which have been acquired,
wherein the first scene is a scene in which the rider deals with the obstacle (2001) by a braking force generated by a brake operation by the rider without changing a traveling direction of the leaning vehicle (1001), and the second scene is a scene in which the rider deals with the obstacle (2001) by both a change of the traveling direction of the leaning vehicle (1001) and the braking force generated by the brake operation by the rider.

2. The leaning vehicle (1001) according to claim 1, wherein
the brake assist control device (1011) is configured to control the assisting braking force so that the first braking force, which is the maximum braking force generated in response to a first brake operation amount performed by the rider in the first scene, is larger than a third braking force, which is the maximum braking force generated in response to the first brake operation amount performed by the rider in a third scene, based on the at least one of the leaning angular speed or the leaning angular acceleration, the margin acquired based on the relationship between the obstacle (2001) and the leaning vehicle (1001), and the brake operation amount performed by the rider, which have been acquired,
the first scene is a scene in which the rider deals with the obstacle (2001) by the braking force generated by a brake operation by the rider without changing a traveling direction of the leaning vehicle (1001), and the third scene is a scene in which no obstacle (2001) exists ahead of the leaning vehicle (1001) in the traveling direction and the rider performs the brake operation without changing the traveling direction of the leaning vehicle (1001).

3. The leaning vehicle (1001) according to claim 1 or 2, wherein
the brake assist control device (1011) is configured to control the assisting braking force so that the second braking force, which is the maximum braking force generated in response to a first brake operation amount performed by the rider in the second scene, is equal to or larger than a fourth braking force which is the maximum braking force generated in response to the first brake operation amount performed by the rider in a fourth scene, based on the at least one of the leaning angular speed or the leaning angular acceleration, the margin acquired based on the relationship between the obstacle (2001) and the leaning vehicle (1001), and the brake operation amount performed by the rider, which have been acquired,
the second scene is a scene in which the rider deals with the obstacle (2001) by both a change in the traveling direction of the leaning vehicle (1001) and the braking force generated by the brake operation by the rider, and the fourth scene is a scene in which no obstacle (2001) exists ahead of the leaning vehicle (1001) in the traveling direction and the rider performs the change of the traveling direction of the leaning vehicle (1001) and the brake operation.

4. The leaning vehicle (1001) according to anyone of claims 1 to 3, wherein,
the brake assist control device (1011) has a function of an antilock braking system (1012), and
the brake assist control device (1011) is configured to activate the function of the antilock braking system (1012) in the first scene, in which the rider deals with the obstacle (2001) by the braking force generated by the brake operation by the rider without changing the traveling direction of the leaning vehicle (1001), and in the second scene in which the rider deals with the obstacle (2001) by both a change the traveling direction of the leaning vehicle (1001) and the braking force generated by the brake operation by the rider.

5. The leaning vehicle (1001) according to claim 4, wherein, the brake assist control device (1011) is configured to activate the function of the antilock braking system (1012) in scenes excluding both the first scene, in which the rider deals with the obstacle (2001) by the braking force generated by the brake operation by the rider without changing the traveling direction of the leaning vehicle (1001), and the second scene, in which the rider deals with the obstacle (2001) by both a change of the traveling direction of the leaning vehicle (1001) and the braking force generated by the brake operation by the rider.

6. The leaning vehicle (1001) according to any one of claims 1 to 5, further comprising a notification device (1013) which is configured to be activated before the brake assist control device (1011) controls the assisting braking force.

## Patentansprüche

1. Ein Neigungsfahrzeug (1001), das folgende Merkmale aufweist:
eine Bremsassistent-Steuervorrichtung(1011),
wobei die Bremsassistent-Steuervorrichtung(1011) an einem Neigungsfahrzeug-Karosserierahmen (1002) angebracht ist, wobei sich der Neigungsfahrzeug-Karosserierahmen (1002) beim Rechtsabbiegen in einer Links-Rechts-Richtung des Fahrzeugs nach rechts neigt und beim Linksabbiegen in der Links-Rechts-Richtung des Fahrzeugs nach links neigt,
wobei die Bremsassistent-Steuervorrichtung (1011) konfiguriert ist, basierend auf einer Spanne, die basierend auf einem Verhältnis zwischen einem Hindernis (2001) und dem Neigungsfahrzeug (1001) erhalten wird, und basierend auf einer Bremsbetätigung durch einen Fahrer eine unterstützende Bremskraft zu steuern,
wobei die Bremsassistent-Steuervorrichtung (1011) konfiguriert ist, (i) zumindest eine einer Neigungswinkelgeschwindigkeit, die eine Zeitveränderungsrate eines Neigungswinkels des Neigungsfahrzeugs (1001) ist, oder einer Neigungswinkelbeschleunigung, die eine Zeitveränderungsrate der Neigungswinkelgeschwindigkeit des Neigungsfahrzeugs (1001) ist, (ii) die Spanne, die basierend auf dem Verhältnis zwischen dem Hindernis (2001) und dem Neigungsfahrzeug (1001) erhalten wird, und (iii) eine Bremsbetätigungsmenge, die eine Menge einer Bremsbetätigung seitens des Fahrers ist, zu erfassen, und
**gekennzeichnet durch**
wobei die Bremsassistent-Steuervorrichtung (1011) konfiguriert ist, die unterstützende Bremskraft zu steuern, sodass eine erste Bremskraft, die die maximale Bremskraft ist, die ansprechend auf eine erste Bremsbetätigungsmenge erzeugt wird, die in einer ersten Szene seitens des Fahrers durchgeführt wird, größer ist als eine zweite Bremskraft, die die maximale Bremskraft ist, die ansprechend auf die erste Bremsbetätigungsmenge erzeugt wird, die in einer zweiten Szene seitens des Fahrers durchgeführt wird, basierend auf der zumindest einen der Neigungswinkelgeschwindigkeit oder der Neigungswinkelbeschleunigung, der Spanne, die basierend auf dem Verhältnis zwischen dem Hindernis (2001) und dem Neigungsfahrzeug (1001) erfasst wird, und der Bremsbetätigungsmenge, die seitens des Fahrers durchgeführt wurde, die erfasst wurden,
wobei die erste Szene eine Szene ist, in der der Fahrer das Hindernis (2001) durch eine Bremskraft bewältigt, die durch eine Bremsbetätigung seitens des Fahrers erzeugt wird, ohne Veränderung einer Fahrtrichtung des Neigungsfahrzeugs (1001), und die zweite Szene, eine Szene ist, in der der Fahrer das Hindernis (2001) durch eine Veränderung der Fahrtrichtung des Neigungsfahrzeugs (1001) und die Bremskraft bewältigt, die durch die Bremsbetätigung seitens des Fahrers erzeugt wird.

2. Das Neigungsfahrzeug (1001) gemäß Anspruch 1, bei dem
die Bremsassistent-Steuervorrichtung (1011) konfiguriert ist, die unterstützende Bremskraft zu steuern, sodass die erste Bremskraft, die die maximale Bremskraft ist, die ansprechend auf eine erste Bremsbetätigungsmenge erzeugt wird, die in der ersten Szene seitens des Fahrers durchgeführt wird, größer ist als eine dritte Bremskraft, die die maximale Bremskraft ist, die ansprechend auf die erste Bremsbetätigungsmenge erzeugt wird, die in einer dritten Szene seitens des Fahrers durchgeführt wird, basierend auf der zumindest einen der Neigungswinkelgeschwindigkeit oder der Neigungswinkelbeschleunigung, der Spanne, die basierend auf dem Verhältnis zwischen dem Hindernis (2001) und dem Neigungsfahrzeug (1001) erfasst wird, und der Bremsbetätigungsmenge, die seitens des Fahrers durchgeführt wird, die erfasst wurden,
die erste Szene eine Szene ist, in der der Fahrer das Hindernis (2001) durch die Bremskraft bewältigt, die durch eine Bremsbetätigung seitens des Fahrers erzeugt wird, ohne Veränderung einer Fahrtrichtung des Neigungsfahrzeugs (1001), und die dritte Szene eine Szene ist, in der in der Fahrtrichtung kein Hindernis (2001) vor dem Neigungsfahrzeug (1001) vorhanden ist und der Fahrer die Bremsbetätigung ohne Verändern der Fahrtrichtung des Neigungsfahrzeugs (1001) durchführt.

3. Das Neigungsfahrzeug (1001) gemäß Anspruch 1 oder 2, bei dem
die Bremsassistent-Steuervorrichtung (1011) konfiguriert ist, die unterstützende Bremskraft zu steuern, sodass die zweite Bremskraft, die die maximale Bremskraft ist, die ansprechend auf eine erste Bremsbetätigungsmenge erzeugt wird, die in der zweiten Szene seitens des Fahrers durchgeführt wird, gleich oder größer als eine vierte Bremskraft ist, die die maximale Bremskraft ist, die ansprechend auf die erste Bremsbetätigungsmenge erzeugt wird, die in einer vierten Szene seitens des Fahrers durchgeführt wird, basierend auf der zumindest einen der Neigungswinkelgeschwindigkeit oder der Neigungswinkelbeschleunigung, der Spanne, die basierend auf dem Verhältnis zwischen dem Hindernis (2001) und dem Neigungsfahrzeug (1001) erfasst wird, und der Bremsbetätigungsmenge, die seitens des Fahrers durchgeführt wird, die erfasst wurden,
die zweite Szene eine Szene ist, in der der Fahrer das Hindernis durch sowohl eine Veränderung der Fahrtrichtung des Neigungsfahrzeugs (1001) als auch die Bremskraft bewältigt, die durch die Bremsoperation seitens des Fahrers erzeugt wird, und die vierte Szene eine Szene ist, in der in der Fahrtrichtung kein Hindernis (2001) vor dem Neigungsfahrzeug (1001) vorhanden ist und der Fahrer die Veränderung der Fahrtrichtung des Neigungsfahrzeugs (1001) und die Bremsoperation durchführt.

4. Das Neigungsfahrzeug (1001) gemäß einem der Ansprüche 1 bis 3, bei dem
die Bremsassistent-Steuervorrichtung (1011) eine Funktion eines Antiblockier-Bremssystems (1012) aufweist, und
die Bremsassistent-Steuervorrichtung (1011) konfiguriert ist, die Funktion des Antiblockier-Bremssystems in der ersten Szene zu aktivieren, in der der Fahrer das Hindernis (2001) durch die Bremskraft bewältigt, die durch die Bremsbetätigung seitens des Fahrer erzeugt wird, ohne Veränderung der Fahrtrichtung des Neigungsfahrzeuges (1001), und in der zweiten Szene, in der der Fahrers das Hindernis (2001) durch sowohl eine Veränderung der Fahrtrichtung des Neigungsfahrzeugs (1001) als auch die Bremskraft bewältigt, die durch die Bremsoperation seitens des Fahrers erzeugt wird.

5. Das Neigungsfahrzeug (1001) gemäß Anspruch 4, bei dem die Bremsassistent-Steuervorrichtung (1011) konfiguriert ist, die Funktion des Antiblockier-Bremssystems (1012) in Szenen zu aktivieren, mit Ausnahme sowohl der ersten Szene, in der der Fahrer das Hindernis (2001) durch die Bremskraft bewältigt, die durch die Bremsoperation seitens des Fahrers erzeugt wird, ohne Veränderung der Fahrtrichtung des Neigungsfahrzeugs (1001), als auch der zweiten Szene, in der der Fahrer das Hindernis (2001) durch eine Veränderung der Fahrtrichtung des Neigungsfahrzeugs (1001) und die Bremskraft bewältigt, die durch die Bremsoperation seitens des Fahrers erzeugt wird.

6. Das Neigungsfahrzeug (1001) gemäß einem der Ansprüche 1 bis 5, das ferner eine Mitteilungsvorrichtung (1013) aufweist, die konfiguriert ist, aktiviert zu werden, bevor die Bremsassistent-Steuervorrichtung (1011) die unterstützende Bremskraft steuert.

## Revendications

1. Véhicule à inclinaison (1001), comprenant:
un dispositif de commande d'assistance au freinage (1011),
dans lequel le dispositif de commande d'assistance au freinage (1011) est monté sur un châssis de carrosserie de véhicule à inclinaison (1002), le châssis de carrosserie de véhicule à inclinaison (1002) s'inclinant vers la droite dans une direction gauche-droite du véhicule lorsqu'il vire à droite et s'inclinant vers la gauche dans la direction gauche-droite du véhicule direction lorsqu'il vire à gauche,
dans lequel le dispositif de commande d'assistance au freinage (1011) est configuré pour commander une force de freinage d'assistance sur base d'une marge obtenue sur base d'un rapport entre un obstacle (2001) et le véhicule à inclinaison (1001) et sur base d'un actionnement de frein par un conducteur,
dans lequel le dispositif de commande d'assistance au freinage (1011) est configuré pour acquérir (i) au moins l'une parmi une vitesse angulaire d'inclinaison, qui est un taux de variation dans le temps d'un angle d'inclinaison du véhicule à inclinaison (1001), ou une accélération angulaire d'inclinaison, qui est un taux de variation dans le temps de la vitesse angulaire d'inclinaison du véhicule à inclinaison (1001), (ii) la marge obtenue sur base du rapport entre l'obstacle (2001) et le véhicule à inclinaison (1001), et (iii) une quantité d'actionnement de frein, qui est une quantité d'un actionnement de frein par le conducteur, et
**caractérisé par**
dans lequel le dispositif de commande d'assistance au freinage (1011) est configuré pour commander la force de freinage d'assistance de sorte qu'une première force de freinage, qui est la force de freinage maximale générée en réponse à une première quantité d'actionnement de frein effectué par le conducteur dans une première scène, soit supérieure à une deuxième force de freinage, qui est la force de freinage maximale générée en réponse à la première quantité d'actionnement de frein effectué par le conducteur dans une deuxième scène, sur base d'au moins l'une parmi la vitesse angulaire d'inclinaison ou l'accélération angulaire d'inclinaison, la marge acquise sur base du rapport entre l'obstacle (2001) et le véhicule à inclinaison (1001), et la quantité d'actionnement de frein effectué par le conducteur, qui ont été acquises,
dans lequel la première scène est une scène dans laquelle le conducteur traite l'obstacle (2001) par une force de freinage générée par un actionnement de frein par le conducteur sans changer une direction de déplacement du véhicule à inclinaison (1001), et la deuxième scène est une scène dans laquelle le conducteur traite l'obstacle (2001) en changeant tant la direction de déplacement du véhicule à inclinaison (1001) que la force de freinage générée par l'actionnement du frein par le conducteur.

2. Véhicule à inclinaison (1001) selon la revendication 1, dans lequel
le dispositif de commande d'assistance au freinage (1011) est configuré pour commander la force de freinage d'assistance de sorte que la première force de freinage, qui est la force de freinage maximale générée en réponse à une première quantité d'actionnement de frein effectué par le conducteur dans la première scène, soit supérieure à une troisième force de freinage, qui est la force de freinage maximale générée en réponse à la première quantité d'actionnement de frein effectué par le conducteur dans une troisième scène, sur base d'au moins l'une parmi la vitesse angulaire d'inclinaison ou l'accélération angulaire d'inclinaison, la marge acquise sur base du rapport entre l'obstacle (2001) et le véhicule à inclinaison (1001), et la quantité d'actionnement de frein effectué par le conducteur, qui ont été acquises,
la première scène est une scène dans laquelle le conducteur traite l'obstacle (2001) par la force de freinage générée par un actionnement de frein par le conducteur sans changer une direction de déplacement du véhicule à inclinaison (1001), et la troisième scène est une scène dans laquelle n'existe aucun obstacle (2001) devant le véhicule à inclinaison (1001) dans la direction de déplacement et le conducteur effectue l'actionnement de frein sans changer la direction de déplacement du véhicule à inclinaison (1001).

3. Véhicule à inclinaison (1001) selon la revendication 1 ou 2, dans lequel
le dispositif de commande d'assistance au freinage (1011) est configuré pour commander la force de freinage d'assistance de sorte que la deuxième force de freinage, qui est la force de freinage maximale générée en réponse à une première quantité d'actionnement de frein effectué par le conducteur dans la deuxième scène, soit égale ou supérieure à une quatrième force de freinage, qui est la force de freinage maximale générée en réponse à la première quantité d'actionnement de frein effectué par le conducteur dans une quatrième scène, sur base d'au moins l'une parmi la vitesse angulaire d'inclinaison ou l'accélération angulaire d'inclinaison, la marge acquise sur base du rapport entre l'obstacle (2001) et le véhicule à inclinaison (1001), et la quantité d'actionnement de frein effectué par le conducteur, qui ont été acquises,
la deuxième scène est une scène dans laquelle le conducteur traite l'obstacle (2001) par un changement tant de la direction de déplacement du véhicule à inclinaison (1001) que par la force de freinage générée par l'actionnement de frein par le conducteur, et la quatrième scène est une scène dans laquelle n'existe aucun obstacle (2001) devant le véhicule à inclinaison (1001) dans la direction de déplacement et le conducteur effectue le changement de la direction de déplacement du véhicule à inclinaison (1001) et l'actionnement de frein.

4. Véhicule à inclinaison (1001) selon l'une quelconque des revendications 1 à 3, dans lequel,
le dispositif de commande d'assistance au freinage (1011) présente une fonction d'un système de freinage antiblocage (1012), et
le dispositif de commande d'assistance au freinage (1011) est configuré pour activer la fonction du système de freinage antiblocage (1012) dans la première scène, dans laquelle le conducteur traite l'obstacle (2001) par la force de freinage générée par l'actionnement du frein par le conducteur sans changer la direction de déplacement du véhicule à inclinaison (1001), et dans la deuxième scène dans laquelle le conducteur traite l'obstacle (2001) en modifiant tant la direction de déplacement du véhicule à inclinaison (1001) que la force de freinage générée par l'actionnement du frein par le conducteur.

5. Véhicule à inclinaison (1001) selon la revendication 4, dans lequel le dispositif de commande d'assistance au freinage (1011) est configuré pour activer la fonction du système de freinage antiblocage (1012) dans des scènes excluant tant la première scène, dans laquelle le conducteur traite l'obstacle (2001) par la force de freinage générée par l'actionnement du frein par le conducteur sans changer la direction de déplacement du véhicule à inclinaison (1001), que la deuxième scène, dans laquelle le conducteur traite l'obstacle (2001) par un changement tant de la direction de déplacement du véhicule à inclinaison (1001) que de la force de freinage générée par l'actionnement du frein par le conducteur.

6. Véhicule à inclinaison (1001) selon l'une quelconque des revendications 1 à 5, comprenant par ailleurs un dispositif de notification (1013) qui est configuré pour être activé avant que le dispositif de commande d'assistance au freinage (1011) ne commande la force de freinage d'assistance.
